# EUROPÄISCHE PATENTSCHRIFT

(11) **EP 1 216 200 B1**
(45) Veröffentlichungstag und Bekanntmachung des Hinweises auf die Patenterteilung: **30.03.2005**
(21) Anmeldenummer: 00967669.3
(22) Anmeldetag: 14.09.2000
(51) Int. Cl.: C01B 3/38

(54) **GASERZEUGUNGSSYSTEM**
GAS PRODUCING SYSTEM
SYSTEME DE PRODUCTION DE GAZ

(30) Priorität: 15.09.1999 DE 19944187
(43) Veröffentlichungstag der Anmeldung: 26.06.2002
(73) Patentinhaber: Ballard Power Systems AG, 73230 Kirchheim / Teck-Nabern (DE)
(72) Erfinder: EBERT, Andreas, 73021 Kirchheim/Teck (DE); HASSERT, Alexandra, 73117 Wangen (DE); HEUSER, Ralf, D-89075 Ulm (DE); LAMLA, Oskar, 73266 Bissingen a. d. Teck (DE); PORTSCHER, Markus, 73235 Weilheim/Teck (DE); SCHÜSSLER, Martin, 89073 Ulm (DE); STEFANOVSKI, Tomas, 71034 Böblingen (DE)
(74) Vertreter: Beyer, Andreas, Dr.
(86) Internationale Anmeldenummer: PCT/EP2000/008956
(87) Internationale Veröffentlichungsnummer: WO 2001/019726

(56) Entgegenhaltungen:
- EP-A- 0 861 802
- DE-A- 19 743 673
- DE-A- 19 754 012

## Beschreibung

Die Erfindung betrifft eine Vorrichtung zur Erzeugung eines wasserstoffreichen Gases aus einem flüssigen, wasserstoffhaltigen Kraftstoff durch eine Reformierungsreaktion gemäß dem Oberbegriff des Patentanspruchs 1.

Aus der EP 861 802 A2 ist eine gattungsgemäße Vorrichtung bekannt, bei der sämtliche Funktionen eines herkömmlichen Gaserzeugungssystems in einen sogenannten Stapelreaktor integriert sind. Für jede Funktion, daß heißt für Eduktvorwärmung, Verdampfung, Reformierung, Shiftreaktion, Kohlenmonoxidentfernung und katalytischer Brenner sind einzelne plattenförmige Stufen vorgesehen, die zu einem Reaktor aufeinander gestapelt sind. In den Platten sind Öffnungen vorgesehen, die beim Aufeinanderstapeln Kanäle zur Führung der Fluide in dem Reaktor ausbilden. Zwischen den einzelnen Stufen findet ein Wärmeaustausch statt. Zusätzlich sind spezielle Platten für den Wärmeaustausche vorgesehen.

Weiterhin ist aus der DE 197 43 673 A1 bekannt, zur Wasserstofferzeugung aus Kohlenwasserstoffen einen Katalysator zu Verwenden, der durch Verpressen mindestens eines Katalysatorpulvers in eine einen Formkörper bildende und stark komprimierte Schicht hergestellt ist, wobei das Reaktionsgemisch unter Druckabfall durch die Katalysatorschicht hindurchpreßbar ist. Aus der DE 19847987 A1 beziehungsweise DE 19832625 A1 ist außerdem ein Verfahren zum Herstellen eines solchen Katalysatorformkörpers beziehungsweise ein Verfahren zur Herstellung eines Stapelreaktors aus solchen Katalysatorformkörpern bekannt

Es ist die Aufgabe der Erfindung, eine hinsichtlich Masse, Volumen, Dynamik und thermischer Beanspruchung verbesserte Vorrichtung zur Erzeugung eines wasserstoffreichen Gases zu schaffen.

Diese Aufgabe wird durch eine Vorrichtung mit den Merkmalen des Patentanspruchs 1 gelöst.

Durch die Integration mehrerer oder gegebenenfalls aller Komponenten auf einer gemeinsamen Platte ist es möglich, eine weitere Verbesserung hinsichtlich Masse und Volumen zu erreichen. Außerdem werden Leitungssysteme zur Verbindung der einzelnen Komponenten weitgehend überflüssig, was außerdem die vorhandenen Toträume verringert und damit zur verbesserten Dynamik des Gesamtsystems beiträgt. Insbesondere beim Einsatz in mobilen Anwendungen werden hierfür hohe Anforderungen gestellt. Auch hinsichtlich der Kaltstarteigenschaften ist die weitere Integration vorteilhaft, weil dadurch die Wärmekapazität der aufzuheizenden Massen verringert und so die Kaltstartfähigkeit verbessert wird.

Weiter Vorteile und Ausgestaltungen der Erfindung gehen aus den Unteransprüchen und der Beschreibung hervor. Die Erfindung ist nachstehend anhand einer Prinzipzeichung näher beschrieben, wobei
- Fig. 1: ein erstes Ausführungsbeispiel einer erfindungsgemäßen Platte mit einer durchströmten Katalysatorschicht, wobei alle Komponenten in eine Platte integriert sind,
- Fig. 2: einen Schnitt durch einen Plattenstapel mit Platten gemäß Fig. 1 entlang der Linie I-I,
- Fig. 3: ein weiteres Ausführungsbeipiel einer erfindungsgemäßen Platte mit teilweiser Über- und Durchströmung der porösen Schicht teilweise im Schnitt,
- Fig. 4: eine Abwandlung des Ausführungsbeispiels gemäß Fig. 3,
- Fig. 5: ein weiteres Ausführungsbeipiel einer erfindungsgemäßen Platte mit teilweiser Belegung mit einer porösen Schicht im Schnitt,
- Fig. 6: ein erstes Ausführungsbeipiel einer erfindungsgemäßen Platte mit einer porösen Schicht für die Integration von Reformierung und selektiver Oxidation im Schnitt,
- Fig. 7: ein zweites Ausführungsbeipiel einer erfindungsgemäßen Platte mit einer porösen Schicht für die Integration von Reformierung und selektiver Oxidation im Schnitt,
- Fig. 8: ein drittes Ausführungsbeipiel einer erfindungsgemäßen Platte mit einer porösen Schicht für die Integration von Reformierung und selektiver Oxidation im Schnitt,
- Fig. 9: ein Ausführungsbeipiel einer erfindungsgemäßen Platte mit einer porösen Schicht für die Integration von Verdampfung und selektiver Oxidation im Schnitt, und
- Fig. 10: ein Ausführungsbeipiel einer erfindungsgemäßen Platte mit einer porösen Schicht für die Integration von Verdampfung, Reformierung und selektiver Oxidation im Schnitt zeigt.

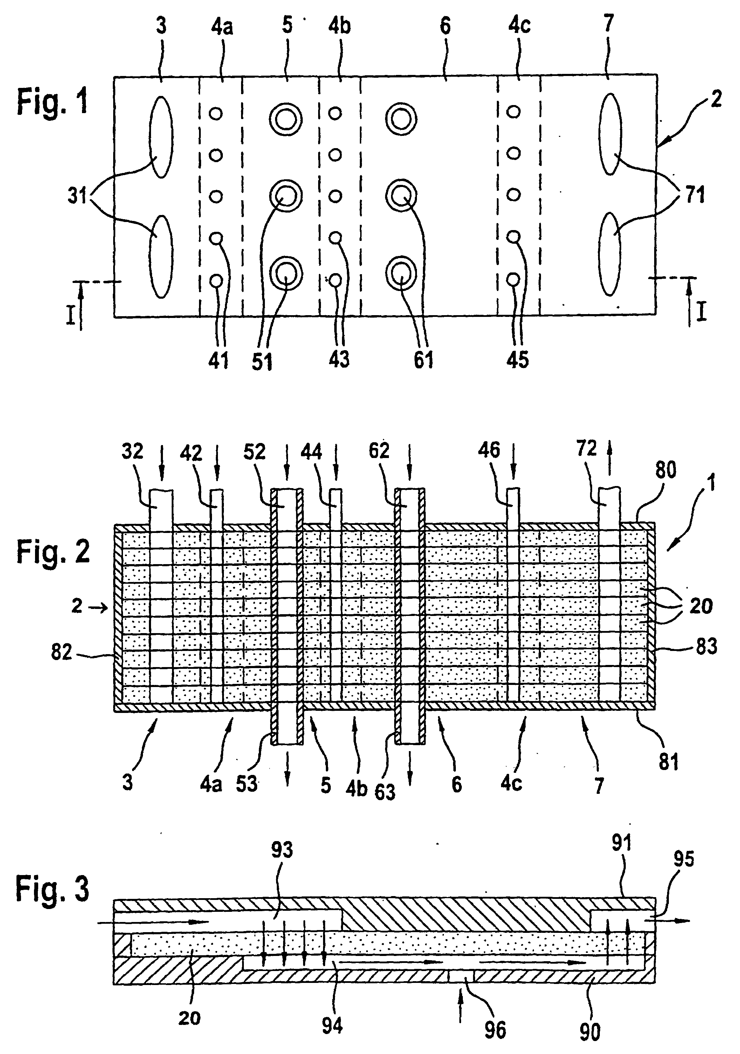

Die insgesamt mit 1 bezeichnete Vorrichtung zur Erzeugung eines wasserstoffreichen Gases gemäß den Fig. 1 und 2 besteht aus mehreren aufeinandergestapelten Platten 2, wie sie in den Fig. 1 und 2 jeweils als Prinzipbild dargestellt sind. In diesem Ausführungsbeispiel besteht die Platte 2 vollständig aus einer porösen, durch Verpressen von Katalysatormaterial gebildeten Schicht 20, die von den beteiligten Medien unter Druckabfall durchströmt wird. Die Platten 2 umfassen jeweils mehrere Komponenten 5-7, die in der Zeichnung schematisch durch gestrichelte Linien voneinander getrennt sind. In Wirklichkeit können die Bereiche auch fließend ineinander übergehen.

Die Komponente 3 dient zur Zuführung von Reaktionsedukten, beispielsweise von flüssigem Wasser und Luft. Hierzu sind im Zuführbereich 3 in der Platte 2 zwei Öffnungen 31 vorgesehen. Beim Aufeinanderstapeln der einzelnen Platten 2 bilden die Öffnungen 31 zwei in Stapelrichtung verlaufende Zuführkanäle 32. Aus diesen Zuführkanälen 32 strömt das zugeführte Wasser/Luft-Gemisch im wesentlichen senkrecht zur Stapelrichtung in die poröse Schicht 20 der Platte 2. An den Zuführbereich 3 grenzt ein erster Mischbereich 4a an, in dessen Bereich ein Vielzahl von Öffnungen 41 vorgesehen sind. Diese Öffnungen 41 dienen im Ausführungsbeispiel zur Zufuhr eines flüssigen Brennmittels, beispielsweise Methanol. Beim Aufeinanderstapeln der einzelnen Platten 2 bilden die Öffnungen 41 mehrere in Stapelrichtung verlaufende Zuführkanäle 42. Aus diesen Zuführkanälen 42 strömt das zugeführte Brennmittel ebenfalls im wesentlichen senkrecht zur Stapelrichtung in die poröse Schicht 20 der Platte 2 und mischt sich dort mit dem Wasser/Luft-Gemisch. Aus diesem Grund wird dieser Bereich als Mischbereich 4a bezeichnet. Sollte in diesem Bereich bereits eine ausreichende Temperatur herrschen, so ist es auch möglich, daß die in dem Eduktgasstrom enthaltende Luft bereits im ersten Mischbereich 4a mit dem zugeführten Brennmittel reagiert und dabei thermische Energie freisetzt. Aus diesem Grunde sind die eingezeichneten Grenzen zwischen den Bereichen nur zur Veranschaulichung dargestellt, wie bereits weiter oben ausgeführt.

An diesen ersten Mischbereich 4a grenzt ein Verdampfungsbereich 5 an, in dessen Bereich wiederum mehrere Öffnungen 51 vorgesehen sind. Diese Öffnungen 51 dienen im Ausführungsbeispiel zur Temperierung des Verdampfungsbereichs 5. Beim Aufeinanderstapeln der einzelnen Platten 2 bilden die Öffnungen 51 mehrere in Stapelrichtung verlaufende Heizkanäle 52. Im Gegensatz zu den bisher beschriebenen Kanälen 32 und 42 stehen die Heiz kanäle 52 nicht in Strömungsverbindung mit der porösen Schicht 20. Vielmehr sind diese Heizkanäle über eine Wandung 53 gasdicht gegen die poröse Schicht 20 abgedichtet, so daß kein Fluidaustausch zwischen den Heizkanälen 52 und der porösen Schicht 20 erfolgt. Das durch die Heizkanäle 52 geführte Heizfluid dient somit ausschließlich zur Beheizung des Verdampfungsbereichs 5. Die Abdichtung kann auf beliebige Art und Weise erfolgen. Beispielsweise kann eine Randabdichtung 53 durch eine höhere Preßkraft auf das Ausgangsmaterial in diesem Bereich hergestellt werden. Es ist ebenfalls möglich, spezielle Materialien in diesen Bereich einzubringen, die dann während des Herstellver fahrens oder im Betrieb eine gasdichte Randabdichtung 53 ausbilden. Weiterhin wäre es möglich, ein gasdichtes Rohr oder ähnliches in die Heizkanäle 52 einzubringen. Selbstverständlich sind auch beliebige andere Randabdichtungen einsetzbar.

Die Zufuhr von thermischer Energie zum Verdampfungsbereich 5 kann beispielsweise dadurch erfolgen, daß ein heißes Medium, beispielsweise ein Thermoöl, durch die Heizkanäle 52 geführt wird, welches beim Durchströmen einen Teil seiner thermischen Energie auf die angrenzende Schicht 20 überträgt. Es ist jedoch ebenfalls möglich, die thermische Energie katalytisch innerhalb der Heizkanäle 52 zu erzeugen. Hierzu sind die Heizkanäle 52 in beliebiger Form, beispielsweise in Form einer Schüttung oder einer Beschichtung, mit einem Katalysatormaterial versehen. Durch die Heizkanäle strömt dann ein Brennmittel/Luft-Gemisch, welches zur Erzeugung der thermischen Energie an dem Katalysator exotherm umgesetzt wird. Sollte das bei der Umsetzung entstehende Abgas keine störende Komponenten enthalten, so ist es auch denkbar, auf die Randabdichtung zu verdichten, so daß das Abgas in den durch die poröse Schicht 20 strömenden Gasstrom abgegeben wird.

An den Verdampfungsbereich 5 grenzt ein zweiter Mischbereich 4b an, in dessen Bereich wiederum mehrere Öffnungen 43 vorgesehen sind. Diese Öffnungen 43 dienen im Ausführungsbeispiel zur Zufuhr weiterer Luft. Beim Aufeinanderstapeln der einzelnen Platten 2 bilden die Öffnungen 43 mehrere in Stapelrichtung verlaufende Zuführkanäle 44. Aus diesen Zuführkanälen 44 strömt die zugeführte Luft im wesentlichen senkrecht zur Stapel richtung in die poröse Schicht 20 der Platte 2 und mischt sich dort mit dem verdampften Wasser/Brennmittel/Luft-Gemisch. Diese zusätzliche Luft wird im angrenzenden Reformierungsbereich 6 für die sogenannte autotherme Reformierung benötigt. Bei dieser bekannten Reaktion wird Brennmittel, Wasser und Sauerstoff im wesentlichen zu Wasserstoff und Kohlendioxid umgesetzt. Zusätzlich ist im Reformat jedoch auch ein geringer Anteil an Kohlenmonoxid enthalten.

Im Reformierungsbereich 6 können analog zum Verdampfungsbereich Öffnungen 61 zur Ausbildung von weiteren Heizkanäle 62 mit Randabdichtungen 63 vorgesehen sein. Der Aufbau und die Funktion entspricht dem oben beschriebenen. An den Reformierungsbereich 6 grenzt ein dritter Mischbereich 4c mit Öffnungen 45 und Kanälen 46, wie er bereits weiter oben anhand des zweiten Mischbereichs 4b beschrieben wurde, zur Zufuhr weiterer Luft an. Diese zusätzliche Luft wird im angrenzenden CO-Oxidationsbereich 7 zur selektiven katalytischen Oxidation des im Reformat enthaltenen Kohlenmonoxids benötigt. Diese Reaktion wird ebenfalls seit langem zur Reinigung des Reformates benutzt und wird daher nicht weiter beschrieben. Im CO-Oxidationsbreich 7 sind schließlich zwei Öffnungen 71 zur Ausbildung von Abführkanälen 72 vorgesehen. Über diese Abführkanäle 72 wird das Reaktionsprodukt anschließend aus der Vorrichtung 1 abgeführt.

Obwohl bisher jeweils von Luft gesprochen wurde ist für den Fachmann offensichtlich, daß als Luft neben der normalen Umgebungsluft auch im Sauerstoffgehalt angereicherte Luft oder gas reiner Sauerstoff verwendet werden kann. Weiterhin soll darauf hingewiesen werden, daß die Position und Anzahl der Öffnungen 31, 41, 43, 45, 51, 61, 71 nur exemplarisch dargestellt sind und jederzeit den Gegebenheiten angepaßt werden kann.

Insgesamt wird in diesem Ausführungsbeispiel also die poröse Schicht 20 in der Zeichnungsebene von links nach rechts unter Druckabfall durchströmt. Zusätzlich werden über die Kanäle 41, 43, 45 zusätzliche Fluide entlang des Gasströmungsweg in die poröse Schicht 20 und somit in den Gasstrom eingebracht. Die gezeigte Ausführungsform, bei der alle Komponenten des Gaserzeugungssystems in eine einzige Platte 2 integriert sind, die kompakteste Realisierung dar. Es ist jedoch innerhalb der Erfindung auch möglich, nur ein Teil der Komponenten in eine gemeinsame Platte 2 zu integrieren. Üblicherweise wird der Stapel aus Platten 2 auf beiden Seiten durch Endplatten 80, 81 abgeschlossen. Weiterhin ist der Plattenstapel seitlich durch Gehäusewände 82, 83 gegen die Umgebung abgedichtet. Die Randabdichtung kann aber auch direkt in die poröse Schicht 20 integriert werden, wie es weiter oben bereits im Zusammenhang mit den Randabdichtungen 53, 63 in den Heizkanälen 52, 62 beschrieben wurde. Die Zuführung aller Fluide erfolgt in dem gezeigten Ausführungsbeispiel ausschließlich über schematisch dargestellte Zuführungen in der oberen Endplatte 80. Die Abführung für das Reformat ist ebenfalls in der oberen Endplatte 80 integriert. Lediglich die Abführungen für die Heizkanäle 52, 62 ist in die untere Endplatte 81 integriert. Selbstverständlich liegt es im fachmännischen Können eines Fachmannes, die Zubeziehungsweise Abführungen an anderen geeigneten Stellen vorzusehen. Insbesondere ist auch ein Zu- beziehungsweise Abführung durch die Gehäusewände 82, 83 möglich. Außerdem können mehrere Kanäle innerhalb der Endplatten 80, 81 zusammengeführt werden.

Die Schicht 20 wird durch Verpressen von Katalysatormaterial in eine dünne und großflächige, stark komprimierte Schicht gebildet. Als Katalysatormaterial wird ein feinkörniges Katalysatorpulver oder -granulat verwendet, dessen Körner einen Durchmesser von ca. 0,5 mm oder kleiner haben. Das Verpressen erfolgt beispielsweise bei Temperaturen von ca. 200° bis 500°C.

Die poröse Schicht 20 wird von den Fluiden unter Druckbeauf schlagung durchströmt. Beim Durchströmen der porösen Schicht 2 erfährt das Reaktionsgemisch einen Druckabfall Δp von ca. 100 mbar und mehr (beispielsweise 1 bis 4 bar). Um dem Katalysatormaterial eine bessere mechanische Stabilität und/oder verbesserte Wärmeleitung zu verleihen, wird das Katalysatormaterial in eine Trägerstruktur verpreßt. Bei dieser Trägerstruktur handelt es sich um eine netzartige Matrix, die vorzugsweise durch Vermischen des mindestens einen Katalysatorpulvers mit dendritischem Kupfer in Pulverform und Verpressen dieses Gemisches erhalten wird. Beim Verpressen bildet das dendritische Kupfer eine netzartige Matrixstruktur, in welche die Katalysatorkörner "eingebaut" sind. Das dendritische Kupferpulver läßt sich auch bei einem relativ geringen Massenanteil des Kupferpulvers zur Gesamtmasse der Schicht leicht zu einem Netz zusammenpressen bzw. versintern, hat eine große Oberfläche und ist selber katalytisch aktiv. Durch die Verwendung von dendritischem Kupferpulver wird deshalb ein stabilisierendes, fixierendes und wärmeverteilendes Netz im Mikrometer-Bereich erhalten. Die Schicht 20 weist eine relativ große Fläche von beispielsweise 100 cm² auf. Um eine kompaktere Bauweise zu erreichen, wird das von dem Reaktionsgemisch zu durchfließende Katalysatorvolumen auf mehrere Schichten aufgeteilt, die jedoch nicht nebeneinander, sondern hintereinander, aber parallel geschaltet angeordnet sind.

Zur Herstellung eines Stapelkörpers werden mehrere aus porösem Katalysatormaterial gepreßte Scheiben aufeinandergestapelt und gemeinsam unter Druckbeaufschlagung gesintert. Ein solches bevorzugtes Herstellverfahren ist in der DE 198 32 625 A1 der Anmelderin offenbart.

Im Ausführungsbeispiel gemäß Fig. 3 ist zusätzlich zu der porösen Schicht 20 eine Grundplatte 90 vorgesehen. Die obere Grundplatte 91 dieser Prinzipdarstellung gehört eigentlich zur nächsten Schicht einer Stapelanordnung und ist nur zur Verdeutlichung eingezeichnet. Hierbei ist die poröse Schicht 2 als durchgehende Schicht konstanter Dicke ausgeführt. Die Grundplatten 90, 91 weisen dagegen in Teilbereichen Ausnehmungen 93 bis 95 auf. Durch diese Ausnehmungen 93 bis 95 wird eine teilweise Über- und Durchströmung der porösen Schicht 20 realisiert. Über eine nicht dargestellt Zuführung oder einen entsprechenden Kanal wird das Fluid in die Ausnehmung 93 geführt und überströmt dabei die benachbarte Schicht 20. An der Begrenzung der Ausnehmung 93 ist das Fluid gezwungen, die poröse Schicht 20 zu Durchströmen um in die gegenüberliegende Ausnehmung 94 zu gelangen. In dem Bereich dieser Ausnehmung 94 ist eine Öffnung 96 zur Zufuhr eines weiteren Fluids vorgesehen. Wiederum an der Begrenzung der Ausnehmung 94 ist das Fluidgemisch gezwungen, die poröse Schicht 20 erneut, jetzt aber in entgegengesetzter Richtung zu Durchströmen, ehe es über die Ausnehmung 95 an eine nicht dargestellte Abführung oder einen entsprechenden Kanal abgegeben wird. Innerhalb dieses Fluidströmungsweges ist es analog zum Ausführungsbeispiel gemäß den Fig. 1 und 2 möglich, mehrere Komponenten zu integrieren. Eine Aufteilung in unter schiedliche Bereiche ist hier zur Vereinfachung nicht eingezeichnet. Neben der einen dargestellten Öffnung 96 ist es selbstverständlich auch hier möglich, bei Bedarf weitere Öffnungen beziehungsweise Kanäle zur Zufuhr von Fluiden beziehungsweise Temperierung der Bereiche vorzusehen.

Die Ausnehmungen 93 bis 95 können durch flächiges Abtragen von Material aus den Grundplatten 90, 91 ausgebildet werden. Gegebenenfalls können in die entstehenden Räume Strömungsleitstrukturen eingebracht werden. Eine andere Möglichkeit besteht darin, Kanalstrukturen in die Grundplatten 90, 91 einzubringen. Das Fluid wird hierbei durch die eigentlichen Kanäle geführt, während sich die poröse Schicht 20 an den Kanalwänden abstützen kann. Dies führt zu einer besseren Stabilität der Vorrichtung.

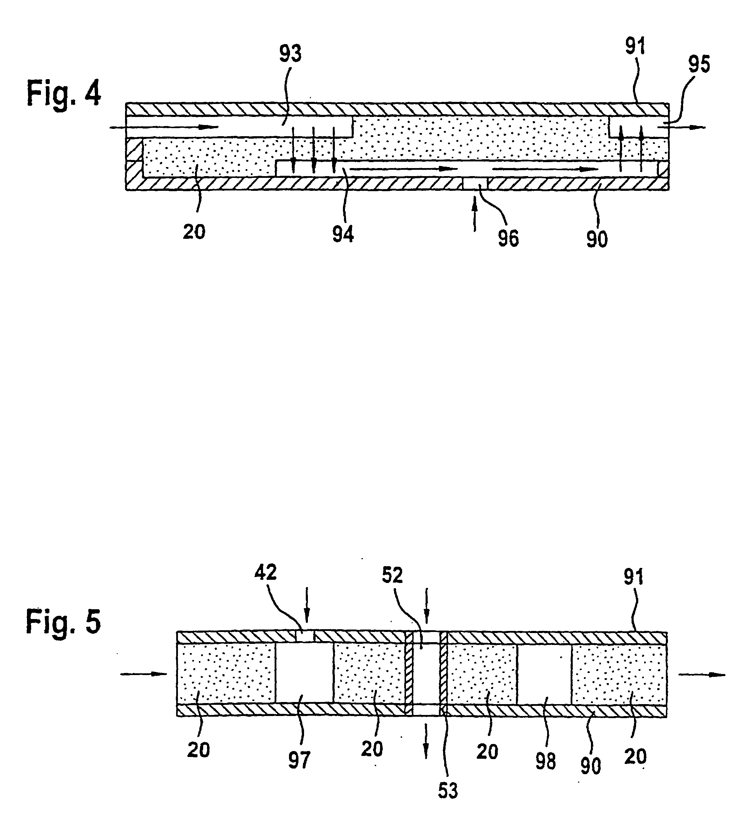

In Abwandlung des Ausführungsbeispiels gemäß Fig. 3 kann, wie in Fig. 4 gezeigt, bei den Grundplatten 90, 91 auf Ausnehmungen verzichtet werden. Im Gegenzug werden in die poröse Schicht 20 entsprechende Ausnehmungen 93 bis 95 oder Kanalstrukturen eingebracht. Die Funktion entspricht der des vorherigen Ausführungsbeispiels. Die Kanalstrukturen können beispielsweise durch Einpressen oder mittels Methoden der Mikromechanik, beispielsweise durch Ätzen, in die Grundplatten 90, 91 beziehungsweise in die poröse Schicht 20 eingebracht werden.

In dem Ausführungsbeispiel gemäß Fig. 5 sind ebenfalls Grundplatten 90, 91 vorgesehen. In diesem Fall sind diese Grundplatten 90, 91 jedoch nur teilweise mit einer porösen Schicht 20 belegt. Zwischen solchen Teilschichten 20 können Bereiche 97, 98 ohne poröse Schicht 20 vorgesehen sein. Diese Bereiche 97, 98 können als Misch- oder Reaktionsraum eingesetzt werden. Zur Verdeutlichung des Prinzips ist außerdem ein Zuführkanal 42 und ein Heizkanal 52 mit zugehörigen Wandung 53 eingezeichnet. Auch in diesem Fall ist es selbstverständlich möglich, bei Bedarf weitere Öffnungen beziehungsweise Kanäle zur Zufuhr von Fluiden beziehungsweise Temperierung der Bereiche vorzusehen.

Neben den explizit dargestellten Ausführungsbeispielen ist es auch möglich, die Lehren dieser unterschiedlichen Varianten miteinander zu kombinieren. Zur Erweiterung der Funktionalität ist es außerdem möglich, die Kanäle zur selektiven Zu- beziehungsweise Abfuhr von Fluiden in beziehungsweise aus dem Gasstrom einzusetzen. Hierzu kann die Wandung eines oder mehrerer Kanäle mit einem entsprechend selektiven Material versehen werden. Beispielsweise ist es möglich, Wasserstoff aus einem Gasgemischsstrom mit Hilfe einer Palladiumfolie abzu trennen. Entsprechend ist es möglich, Sauerstoff aus der Umgebungsluft selektiv in den Gasstrom einzubringen.

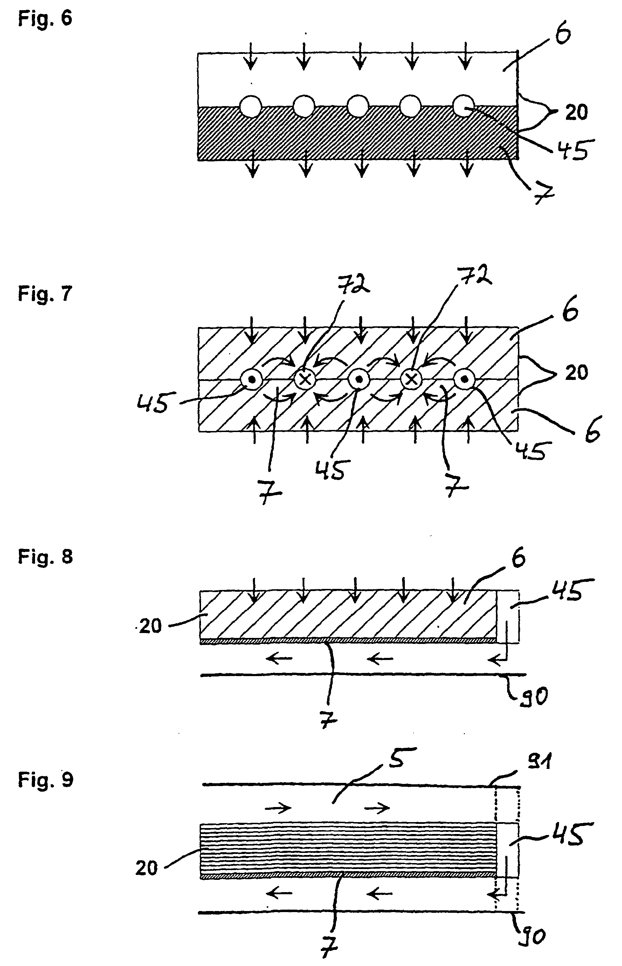

Verschiedene Ausführungsformen, wie man einzelne Komponenten in eine solche gemeinsame Platte 2 integriert, die zumindest teilweise aus einer porösen, durch Verpressen von Katalysatormaterial gebildeten Schicht 20 besteht, zeigen die Fig. 6 bis 10.

Fig. 6 zeigt ein Segment einer solchen Platte 2, bestehend aus zwei porösen, katalytisch wirksamen schichten 20. Die erste als Reformierungsbereich 6 ausgebildete Schicht dient zur Umsetzung der Edukte. In der zweiten, als CO-Oxidationsbereich 7 ausgebildeten Schicht wird mittels eines zusätzlich dosierten Oxidationsmittels, vorzugsweise Luft, das im Abgas des Reformierungsbereichs 6 enthaltene Kohlenmonoxid selektiv katalytisch oxidiert. Hierbei durchströmen die Edukte, die unter Umständen auch Luft ent halten können, die beiden Schichten 6, 7 im wesentlich senkrecht zu ihrer Längserstreckung, wobei zwischen den beiden Schichten 6, 7 eine zusätzliche Luftdosierung für den CO-Oxidationsbereich 7 über Kanäle 45 erfolgt.

Fig. 7 zeigt ebenfalls ein Segment einer solchen Platte 2, bestehend aus zwei porösen, katalytisch wirksamen Schichten, in die alternierend Kanäle 72, 45 für die Produktabführung beziehungsweise für eine zusätzliche Luftdosierung integriert sind. Die beiden Schichten 6 sind jeweils als Reformierungsbereich 6 ausgebildet. In der Grenzschicht zwischen den beiden Reformierungsbereichen 6 wird mittels des zusätzlich dosierten Oxidationsmittels, vorzugsweise Luft, das im Abgas der Reformierung enthaltene Kohlenmonoxid selektiv katalytisch oxidiert. Der als CO-Oxidationsbereich ausgebildete Bereich zwischen den beiden Kanälen 72, 45 dient daher zur selektiven katalytischen Oxidation des Kohlenmonoxids. Bei dieser Anordnung durchströmen die Edukte, die unter Umständen auch Luft enthalten können, die beiden Reformierungsbereiche 6 im wesentlich von Außen nach Innen.

Ein weiteres Ausführungsbeispiel zur Integration eines Reformierungsbereichs 6 und einer CO-Oxidationseinheit 7 in einer Platte 2 zeigt Fig. 8. Hierbei wird im Reformierungsbereich 6 die Schicht wiederum von den Edukten durchströmt, während im CO-Oxidationsbereich 7 die Schicht von dem Abgas der Reformierung überströmt wird. Die für die selektive katalytische Oxidation benötigte Luft wird über einen Kanal 45 zugeführt. Weiterhin ist in diesem Ausführungsbeispiel eine Grundplatte 90 zur Ausbildung eines Abführkanals vorgesehen. In dem Abführkanal mischt sich die Luft mit dem Abgas der Reformierung, so daß es beim Überströmen der Platte 2 zur selektiven katalytischen Oxidation kommt.

Das Ausführungsbeispiel gemäß Fig. 9 zeigt die Kombination eines Verdampfungsbereichs 5 und eines Co-Oxidationsbereichs 7 in einer gemeinsamen Platte 2, wobei beide Seiten der Platte 2 von den jeweiligen Medien überströmt werden. Zusätzlich sind noch eine Grundplatten 90,91 zur Ausbildung von Zu- beziehungsweise Abführkanälen vorgesehen. Durch den Abführkanal wird ein kohlenmonoxidhaltiges Produktgas geführt, dem über einen Kanal 45 Luft zugeführt wird. Dieses Gasgemisch wird dann im CO-Oxidationsbereich 7 beim Überströmen der Schicht selektiv katalytisch oxidiert. Diese Oxidation verläuft exotherm, so daß thermische Energie über die Platte 2 auf die gegenüberliegende Schicht übertragen wird. Im dortigen Verdampfungsbereich 5 nehmen die flüssigen Edukte diese thermische Energie auf und werden dabei verdampft.

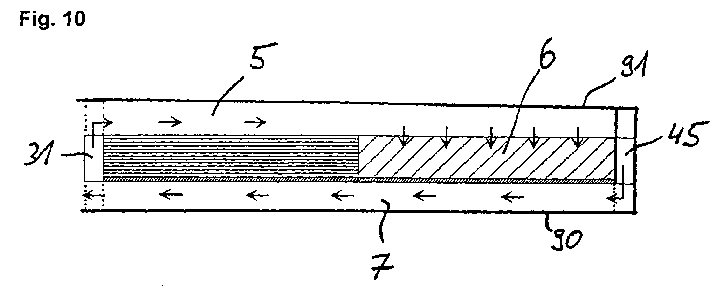

Das Ausführungsbeispiel gemäß Fig. 10 zeigt schließlich die Kombination eines Verdampfungsbereichs 5, eines Reformierungsbereichs 6 und eines CO-Oxidationsbereichs 7 in einer gemeinsamen Platte 2, wobei die Platte 2 im Verdampfungs- und CO-Oxidationsbreich 5, 7 von den jeweiligen Medien überströmt werden, während die Platte 2 im Reformierungsbereich 6 durchströmt wird. Zusätzlich sind noch Grundplatten 90, 91 zur Ausbildung von Zubeziehungsweise Abführkanälen vorgesehen. Durch den Abführkanal wird wiederum ein aus dem Reformierungsbereich 6 stammendes kohlenmonoxidhaltiges Produktgas geführt, dem über einen Kanal 45 Luft zugeführt wird. Dieses Gasgemisch wird dann im CO-Oxidationsbereich 7 beim Überströmen der Schicht selektiv katalytisch oxidiert. Diese Oxidation verläuft exotherm, so daß wiederum thermische Energie über die Platte 2 auf die gegenüberliegende Schicht übertragen wird. Im dortigen Verdampfungsbereich 5 nehmen die flüssigen Edukte diese thermische Energie auf und werden dabei verdampft und anschließend dem Reformierungsbereich 6 zugeführt. Die Zufuhr der flüssigen Edukte in den Verdampfungsbereich 5 erfolgt über einen Kanal 31, welcher sich senkrecht zur Plattenebene durch die Platte 2 erstreckt.

Aus diesen Ausführungsbeispielen 6 bis 10 wird das Prinzip ersichtlich, wie die Anordnung gemäß den Fig. 1 bis 5 ausgeführt werden kann, um die verschiedenen Verschaltungen mehrerer der Komponenten 5-7 in einer einzigen Platte 2 zu realisieren. Hierbei können selbstverständlich mehrere der Ausführungsbeispiele gemäß den Fig. 6 bis 10 kombiniert und in eine einzige Platte 2 integriert werden. Selbstverständlich weisen solche Vorrichtungen im Allgemeinen zusätzlich auch noch Gehäusewände und Endplatten, sowie eventuell weitere Komponenten auf. Auf die Darstellung von Details wurde jedoch zur Vereinfachung und zur Verdeutlichung des Verschaltungsprinzips verzichtet. Die Ausbildung der Kanäle kann wie bereits oben erläutert auf unterschiedliche Art und Weise realisiert werden.

## Patentansprüche

1. Vorrichtung (1) zur Erzeugung eines wasserstoffreichen Gases aus einem flüssigen, wasserstoffhaltigen Kraftstoff durch eine Reformierungsreaktion mit Zuleitungen (32, 42, 44, 46) zur Zufuhr von Edukten und mit Ableitungen (72) zur Abfuhr des Reformates, mit mindestens einer Komponente (5) zur Verdampfung flüssiger Edukte, mit mindestens einer Komponente (6) zum Reformieren, mit mindestens einer Komponente zur katalytischen Erzeugung von thermischer Energie und mit mindestens einer Komponente (7) zur Reduzierung des Kohlenmonoxidanteils im Reformat,
**dadurch gekennzeichnet, dass** zumindest zwei der Komponenten (5 bis 7) auf einer gemeinsamen Platte (2) angeordnet sind, die zumindest teilweise aus einer porösen, durch Verpressen von Katalysatormaterial gebildeten und von den Reaktionsedukten zumindest bereichsweise unter Druckabfall durchströmbaren Schicht (20) besteht.

2. Vorrichtung nach Anspruch 1,
**dadurch gekennzeichnet, dass** alle Komponenten (5 bis 7) auf einer gemeinsamen Platte (2) angeordnet sind.

3. Vorrichtung nach Anspruch 1,
**dadurch gekennzeichnet, dass** die Platte (2) durchgehend aus der porösen, durch Verpressen von Katalysatormaterial gebildeten Schicht (20) gebildet ist.

4. Vorrichtung nach Anspruch 1,
**dadurch gekennzeichnet, dass** die poröse Schicht (20) gasundurchlässige Bereiche aufweist.

5. Vorrichtung nach Anspruch 1,
**dadurch gekennzeichnet, dass** die Platte (2) eine durchgehende Grundplatte (90, 91) aufweist, die in Teilbereichen eine poröse Schicht (20) aufweist.

6. Vorrichtung nach Anspruch 1,
**dadurch gekennzeichnet, dass** in der mit dem Gasstrom in Kontakt stehenden Oberfläche der Platte (2) strömungsführende Strukturen (93 bis 95) eingebracht sind.

7. Vorrichtung nach Anspruch 1,
**dadurch gekennzeichnet, dass** mehrere Platten (2) aufeinandergestapelt sind, wobei die Zuführungen und Abführungen durch Kanäle (32, 72) gebildet sind, die sich beim Stapeln der Platten (2) durch Öffnungen (31, 71) in den Platten (2) ausbilden.

8. Vorrichtung nach Anspruch 1,
**dadurch gekennzeichnet, dass** weitere Zuführungen (42, 44, 46) vorgesehen sind, die im Verlauf des Über- beziehungsweise Durchströmens der Platten (2) in den Gasströmungsweg münden.

9. Vorrichtung nach Anspruch 1,
**dadurch gekennzeichnet, dass** unabhängig von der Eduktgasströmung verlaufende Kanäle (52, 62) zur Temperierung vorgesehen sind.

10. Vorrichtung nach Anspruch 9,
**dadurch gekennzeichnet, dass** die Kanäle zur Temperierung (52, 62) dazu eingerichtet sind, ein Wärmeträgermedium zu führen.

11. Vorrichtung nach Anspruch 9,
**dadurch gekennzeichnet, dass** die Kanäle (52, 62) zur Temperierung dazu eingerichtet sind, ein Reaktionsgemisch zu führen, das zur Erzeugung thermischer Energie katalytisch umsetzbar ist.

12. Vorrichtung nach Anspruch 1,
**dadurch gekennzeichnet, dass** Kanäle (32, 42, 44, 46, 52, 62, 72) vorgesehen sind, die mit dem Eduktgasstrom über eine Membran zur selektiven Zu- oder Abführung eines Fluids in Strömungsvervindung stehen.

13. Vorrichtung nach Anspruch 1,
**dadurch gekennzeichnet, dass** die poröse Schicht (20) durch Verpressen des Katalysatormaterials mit einer netzartigen Trägersturktur aus Kupfer gebildet ist.

14. Vorrichtung nach Anspruch 13,
**dadurch gekennzeichnet, dass** die netzartige Trägerstruktur aus dendritischem Kupfer ist.

## Claims

1. Device (1) for generating a hydrogen-rich gas from a liquid, hydrogen-containing fuel using a reforming reaction, having feed lines (32, 42, 44, 46) for supplying starting materials and having discharge lines (72) for discharging the reformate, having at least one component (5) for evaporating liquid starting materials, having at least one component (6) for reforming, having at least one component for the catalytic generation of thermal energy, and having at least one component (7) for reducing the carbon monoxide level in the reformate, **characterized in that** at least two of the components (5 to 7) are arranged on a common plate (2), which at least partially comprises a porous layer (20) which is formed by pressing catalyst material and through which the reaction starting materials can flow at least in regions with a drop in pressure.

2. Device according to Claim 1, **characterized in that** all the components (5 to 7) are arranged on a common plate (2).

3. Device according to Claim 1, **characterized in that** the plate (2) is formed all the way through from the porous layer (20) formed by pressing catalyst material.

4. Device according to Claim 1, **characterized in that** the porous layer (20) has gas-impermeable regions.

5. Device according to Claim 1, **characterized in that** the plate (2) has a continuous base plate (90, 91) which, in partial regions, has a porous layer (20).

6. Device according to Claim 1, **characterized in that** flow-guiding structures (93 to 95) are made **in that** surface of the plate (2) which is in contact with the gas flow.

7. Device according to Claim 1, **characterized in that** a plurality of plates (2) are stacked on top of one another, the inlets and outlets being formed by passages (32, 72) which are formed by openings (31, 71) in the plates (2) when the plates (2) are stacked.

8. Device according to Claim 1, **characterized in that** further inlets (42, 44, 46) are provided, which, during the flow over or through the plates (2), open out into the gas flow path.

9. Device according to Claim 1, **characterized in that** passages (52, 62) which run independently of the starting-material flow are provided for temperature control purposes.

10. Device according to Claim 9, **characterized in that** the temperature-control passages (52, 62) are designed to carry a heat-transfer medium.

11. Device according to Claim 9, **characterized in that** the temperature-control passages (52, 62) are designed to carry a reaction mixture which can be catalytically converted in order to generate thermal energy.

12. Device according to Claim 1, **characterized in that** passages (32, 42, 44, 46, 52, 62, 72), which are connected in terms of flow to the starting gas stream via a membrane for selectively supplying or discharging a fluid, are provided.

13. Device according to Claim 1, **characterized in that** the porous layer (20) is formed by pressing the catalyst material to a mesh-like support structure made from copper.

14. Device according to Claim 13, **characterized in that** the mesh-like support structure comprises dendritic copper.

## Revendications

1. Dispositif (1) de génération d'un gaz riche en hydrogène à partir d'un carburant liquide contenant de l'hydrogène par une réaction de reformage, avec des conduites d'amenée (32, 42, 44, 46) pour amener des produits de réaction et des conduites d'évacuation (72) pour évacuer le produit de reformage, comportant au mois un composant (5) pour l'évaporation de produits de réaction liquides, au moins un composant (6) pour le reformage, au moins un composant pour la génération catalytique d'énergie thermique et au moins un composant (7) pour la réduction de la part de monoxyde de carbone dans le produit de reformage,
**caractérisé en ce qu'**au moins deux des composants (5 à 7) sont agencés sur une plaque (2) commune qui est constituée au moins partiellement par une couche (20) poreuse, formée par compactage de matériau catalyseur et à travers laquelle les produits de réaction peuvent passer au moins par région, avec chute de pression.

2. Dispositif selon la revendication 1, **caractérisé en ce que** tous les composants (5 à 7) sont agencés sur une plaque commune (2).

3. Dispositif selon la revendication 1, **caractérisé en ce que** la plaque (2) est formée de bout en bout par la couche (20) formée par compactage de matériau catalyseur.

4. Dispositif selon la revendication 1, **caractérisé en ce que** la couche (20) poreuse présente des régions imperméables au gaz.

5. Dispositif selon la revendication 1, **caractérisé en ce que** la plaque (2) présente une plaque de base (90, 91) d'un seul tenant qui présente une couche (20) poreuse dans des régions partielles.

6. Dispositif selon la revendication 1, **caractérisé en ce que** dans la surface de la plaque (2) qui est en contact avec le flux de gaz, sont introduites des structures (93 à 95) guidant des flux.

7. Dispositif selon la revendication 1, **caractérisé en ce que** plusieurs plaques (2) sont empilées les unes au-dessus des autres, les conduites d'amenée et les conduites d'évacuation étant formées par des canaux (32, 72) qui se réalisent par des ouvertures (31, 71) dans les plaques (2) lors de l'empilage des plaques (2).

8. Dispositif selon la revendication 1, **caractérisé en ce qu'**il est prévu d'autres conduites d'amenée (42, 44, 46) qui débouchent dans la voie de flux de gaz au cours de l'écoulement par-dessus ou à travers les plaques (2), respectivement.

9. Dispositif selon la revendication 1, **caractérisé en ce qu'**il est prévu des canaux (52, 56) de températion s'étendant indépendamment du flux de gaz de produits de réaction.

10. Dispositif selon la revendication 9, **caractérisé en ce que** les canaux de températion (52, 62) sont conçus pour amener un fluide caloporteur.

11. Dispositif selon la revendication 9, **caractérisé en ce que** les canaux de températion (52, 56) sont conçus pour amener un mélange de réaction qui peut être transformé par voie catalytique pour produire de l'énergie thermique.

12. Dispositif selon la revendication 1, **caractérisé en ce qu'**il est prévu des canaux (32, 42, 44, 46, 52, 62, 72) qui sont en liaison de flux avec le flux de gaz de produit de réaction via une membrane pour amener ou évacuer sélectivement un fluide.

13. Dispositif selon la revendication 1, **caractérisé en ce que** la couche (20) poreuse est formée par compactage du matériau catalyseur avec une structure portante réticulée en cuivre.

14. Dispositif selon la revendication 13, **caractérisé en ce que** la structure portante réticulée est en cuivre dendritique.
